# EUROPEAN PATENT APPLICATION

(11) **EP 1 361 774 A1**
(43) Date of publication of application: **12.11.2003**
(21) Application number: 02360145.3
(22) Date of filing: 06.05.2002
(51) Int. Cl.: H04Q 7/38, G01S 1/68

(54) **Method for handling emergency calls in a mobile network, and terminal, server, and system therefor**

(71) Applicant: ALCATEL, 75008 Paris (FR)
(72) Inventor: The designation of the inventor has not yet been filed
(74) Representative: Rausch, Gabriele, Dr.

(57) **Abstract**

A method for a treatment of emergency calls in a communications network (MN) comprising an emergency server (SV) to be contacted by an emergency calling terminal (MT,MT'), wherein personal data is entered into a memory (SIM) allocated to said terminal (MT,MT') and wherein in a case, that an emergency situation is detected by said terminal (MT,MT'), an emergency information (EI) comprising said personal data is sent to said emergency server (SV) and the emergency server (SV) sends back a feedback information (FI) to said terminal (MT,MT'), and a terminal, an emergency server and an emergency calling therefore.

## Description

The invention relates to a method for a treatment of emergency calls in a mobile network according to the preamble of claim 1, a terminal according to the preamble of claim 8, an emergency server according to the preamble of claim 9 and an emergency calling system according to the preamble of claim 10.

In emergency cases, e.g. in emergency cases caused by severe car accidents, it is often of high importance for the live of the injured persons to get medical help as soon as possible. Traditionally, in case of an accident, a telephone, e.g. an emergency telephone in close distance to the accident of telephones placed at highways in a certain distance or a mobile phone of one of the persons present at the accident location is used to contact an emergency centre to inform about the accident. For said contact special emergency numbers are provided to be dialled.

The staff of a called emergency centre, after evaluation of the received information, initiates the sending of emergency medical help to the place of accident. It is of great help, if comprehensive personal data of the injured people is known in the emergency centre to be able to send adequate specialists or medicaments, if necessary. But often, the person who is calling the emergency service, does not know about said information.

For automatic transmission of personal medical information, DE 4318441 discloses a mobile phone, that includes a card reader to read out from an inserted chip card medical data of the card owner and, used in case of emergency, sends a corresponding emergency telegram to a central emergency server. Reading said data, appropriate aid can be initiated, e.g. a sending of an appropriate specialist to an injured person.

This system however does not allow any automatic information exchange between the calling terminal and the emergency facilities.

The object of the invention is to propose a method and corresponding devices, wherein an information exchange between concerned devices is carried out in cases of emergency occurrences.

This object is achieved by a method according to the teaching of claim 1, a terminal according to the teaching of claim 8, an emergency server according to the teaching of claim 9 and an emergency calling system according to the teaching of claim 10.

The main idea of the invention is, that means are provided to enter personal data, especially medical data, into a memory allocated a corresponding terminal. The terminal is equipped with means to detect an emergency situation, e.g. a specific key (emergency key) that has to be pressed in an emergency situation or a receiving interface for receiving a signal from an emergency sensor. When detecting an emergency situation, a connection to an emergency server (e.g. national emergency services 112 etc.) is established and said emergency data is transmitted. The emergency server subsequently sends back a feedback information (e.g. a confirmation) to said terminal.

Further developments of the invention can be gathered from the dependent claims and the following description.

In the following the invention will be explained further making reference to the attached drawings in which:
- Fig.1: schematically shows a mobile network connected to an emergency server according to the invention and to a terminal according to the invention and
- Fig.2: schematically shows a further development of Fig.1 with an emergency calling systemaccording to the invention connected to said mobile network instead of said terminal.

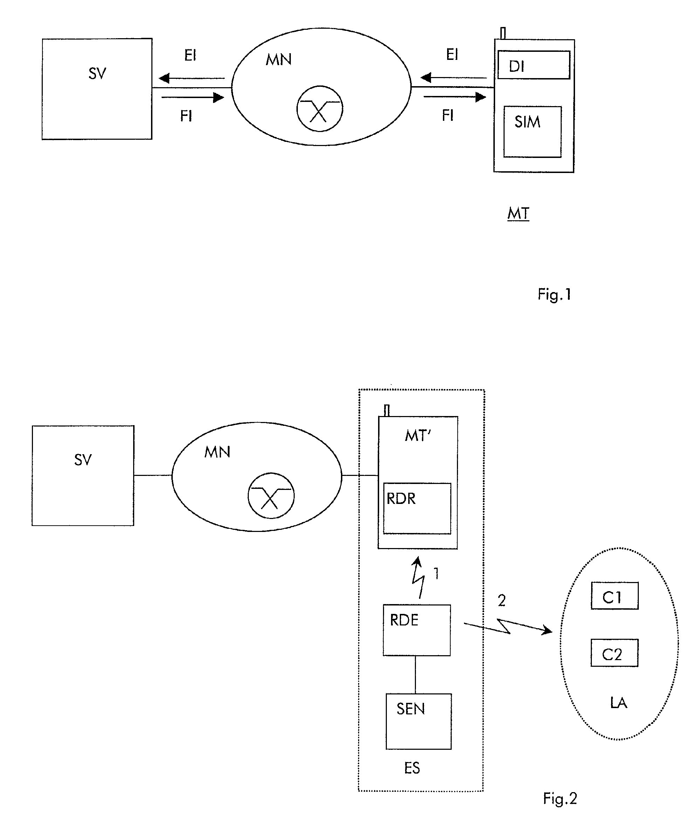

Fig.1 shows a mobile network MN with a connection to an emergency server SV and a connection to a mobile terminal MT. The mobile terminal MT shows a display DI and a memory card SIM. An emergency information EI is sent from the mobile terminal MT over the mobile network to the emergency server SV and a feedback information FI is sent from said emergency server SV to said mobile terminal MT.

For the invention, every kind of communications network and corresponding terminal may be used. As today, nearly everybody owns a mobile terminal and as it is obvious, that mobile terminals are preferably used in cases of accidents, only mobile phones will be considered in the further description.

In the following, by way of example, a sequence of steps are described for carrying out a method according to the invention:

By pressing an emergency key of said mobile terminal MT, a user, e.g. the owner of said terminal or a first aid activates the emergency handling. Alternatively, instead of pressing an emergency key, a defined sequence of keys have to be pressed or a certain number of keys have to be pressed simultaneously. Then, personal information, e.g. the name of the injured person, his blood group and rhesus, allergies diseases, insurance number may be entered into the mobile terminal MT. Moreover, the network address of the emergency server SV (or phone number of the emergency service) must be entered. Additionally, actual information about the accident, e.g. kind and severity of injury and the location (town, street, house number), may be entered.

The personal data may and the network address of the emergency server be entered in advance into the mobile terminal MT and preferably kept stored permanently.

Preferably, for entering said personal and/or actual data, the user is guided by a corresponding display menu asking for the user step by step to enter the data. The information is entered by using the keyboard of the mobile phone.

Alternatively, the information is entered by voice. Said voice information is transformed to text information by a so-called speech-to-text conversion in the mobile terminal.

The mobile terminal MT automatically sends an emergency information (EI) based on said stored or entered information to the emergency server SV. Said emergency information is formatted according to the used communications service.

In one embodiment of the invention, the transmission of information from the mobile terminal MT to the emergency server SV is performed by means of the short message service (SMS) provided to the subscribers in mobile networks, e.g. in a GSM (Global System for Mobile Communications) network. The communication exchange may take place in the following steps:

A first short message or SMS message comprising a warning is sent immediately after the pressure of the emergency key of the mobile terminal MT.

A next SMS message is sent after completion of the manual input of the mobile terminal user, including the entered data.

Finally, SMS messages are sent to predefined addresses, additionally entered or stored in said mobile terminal MT to inform persons that the mobile phone owner wants to inform in cases of accidents.

The feedback information is sent from the emergency server SV to the mobile terminal MT also using the short message service. In the simplest embodiment, this feedback message only contains an acknowledgement, that is automatically sent after the information is received in the emergency server or after processing of said information.

Preferably said message comprises detailed information of what kind of help is provided and an estimation of the time, that will be needed until help will reach the accident location.

Preferably, additional successive messages will be sent until the help arrives.

If an information is too long for one SMS message, several SMS messages may be concatenated.

It is also possible to realise an enhanced information exchange. Thus, the feed back message (FI) of the emergency server SV might comprise a request to answer (an) additional question(s). Accordingly, the mobile terminal (MT) might send an additional message comprising an answer to said question(s).

In a further preferred embodiment, the personal doctor or a hospital keeping medical data about the mobile terminal user is further informed by the mobile terminal MT. The personal doctor might send important information to the emergency server SV or to the mobile terminal MT user. This is of particular importance in cases of special medical problems of the injured person, e.g. if said injured person have to take a special medicine on a strongly regular base.

Personal data might be partly or entirely stored in a central server of the mobile network MN or the emergency server SV itself. For this case, on reception of an emergency information (EI) initiated by the terminal (MT), the server identifies said terminal (MT), i.e. the owner of said mobile terminal or the owner of the SIM inserted in said terminal (MT). Further, the server looks for stored corresponding personal data allocated to said terminal (MT, MT'). The feedback information (FI) to be sent to said terminal (MT, MT') may contain an acknowledgement and/or a request for further information (e.g. actual accident information) not stored in said server.

Alternatively to the short message service, a wireless application protocol (WAP) service or other data services can be used.

In emergency situations, it is important to save as much time as possible for calling medical aid. Thus, it is preferable to keep the usage of the mobile phone as simple as possible. For that, emergency information to be transmitted to the emergency server SV is stored as most as possible in storage means accessible by said mobile phone, e.g. on the well known SIM (Subscriber Identity Module) of a GSM terminal. Preferably said storage means keeps stored all personal data of the mobile terminal (blood group, rhesus, diseases etc.). Moreover, the information to be sent to addresses in case of an emergency may be determined in advance by storing corresponding profile in said storage means.

One important information concerning an emergency situation concerns the location, in which the emergency situations occurred. In existing emergency systems, the emergency service is informed by the calling user. But often, the accurate location might not be known by the user. According to one embodiment of the invention, the location of the mobile terminal MT is automatically determined and sent to the emergency server SV.

For determination of the terminals location, several methods exist. In cellular mobile radio network like the GSM network, the location of active terminals must be known to allocate them to each a corresponding mobile switching centre. Thus, a continuous location determination of said terminals takes place. As soon as a terminal leaves one so-called geographical area of the network and enters a new geographical area, the corresponding subscriber and the new geographical area are noted in a so-called Visitors Location Register (VLR) of the GSM infrastructure. This information now can be used for emergency purposes. However, said geographical areas might cover a rather big region.

Further methods are known in mobile networks, in which it is possible to effect a substantially more accurate location. One well known method concerns the location by means of signals received from satellites, e.g. satellites of the Global Positioning System (GPS). A mobile terminal provided with the corresponding satellite signal receiving means and position calculation means is able to determine its position independently from the mobile network infrastructure. Another method concerns a location determination by means of the network infrastructure. For that, EP 1111403 discloses a method for localisation of mobile terminals, wherein the base stations of the mobile network each send out time synchronised pilot signals. A terminal receiving the pilot signals of at least three base stations is able to determine a relative position by determination of the signal running time differences between each the pilot signals. Preferably, one of these methods is used for determining the actual position of the mobile terminal MT. The corresponding location information can be either explicitly transmitted by the mobile terminal or by a location server of the mobile network MN.

Referring to Fig.2, the mobile network MN and the emergency server SV of Fig.1 are shown. Instead of the terminal MT, an emergency calling system ES connected to said mobile network MN is shown here.

The emergency calling system ES comprises an enhanced mobile terminal MT' with an FM-RDS (frequency modulated radio data system) receiver, further referred to as RDS receiver RDR, and an FM-RDS emitter, further referred to as RDS emitter RDE, that is connected to an emergency sensor SEN. The RDS emitter RDE, emits a first information 1 to the enhanced mobile terminal MT' and optionally a second information 2 to further RDS receivers C1 and C2 within an area IA.

The RDS system a standardised and well known system in Europe for transmitting data together with frequency modulated (FM) voice information. The RDS uses an own sub carrier of a frequency of 57 KHz in the base band.

In the example described here, said emergency calling system is installed in a vehicle. In case of a vehicle accident, the emergency sensor SEN, that might be realised as a shock detector or an existing chock sensor of the air bag system and/or a smoke detector, activates the RDS emitter RDE. This emitter RDE transmits an emergency signal containing the order to generate an emergency signal 1 to inform the RDS receiver RDR. Said RDS receiver RDR, connected to or incorporated in a mobile terminal MT' as shown in Fig.2, detects said emergency signal 1 and initiates an emergency call through the mobile network MN sending emergency information EI and information to further predefined addresses as described under Fig.1.

To avoid interference with other mobile terminals in the neighbourhood, a specific key may be delivered in connection to said emergency signal 1 by the emitter, for uniquely addressing the dedicated mobile terminal MT' .

In a further embodiment of the invention, said RDS emitter RDE, after detection of an accident, sends an additional broadcast emergency signal 2 to be received by further RDS-receivers CA1 and CA2, e.g. as part of the most car radios, within a certain local area LA (e.g. 5 -10 km radius around the emitter RDE) so that the drivers of cars within said area LA are aware of the accident. A car radio receiving said emergency signal switches on a blank frequency to deliver a ringing (beeping) signal by an RDS protocol named TA (Traffic Announcement). A corresponding warning message ("Warning, Accident") is optionally displayed on the display of the car radio by a RDS TMC (Traffic Message Channel) service.

The system to be installed in the car can be based to a high degree on existing components or off-the-shelf components. It only requires minimum additional devices like the RDS emitter RDE , preferably connected to said shock sensor SEN of the airbag system, and a mobile terminal MT' equipped with an RDS receiver RDR. The power alimentation of the emitter RDE can be provided by existing available sources.

The RDS chipset to be connected to a shock sensor SEN substantially consists of a processor, that is programmed such, that the corresponding emitter sends the two types of signals 1 and 2 at different power levels:
- The first signal 1 (basic signal) emitted at low level of power comprises an identification key to be recognised by the receiver within the car.
- The second signal 2 is a typical RDS-FM signal, that is powerful enough to reach receivers at distances up to e.g. 10 kilometres. It may carry a specific message to be displayed on the corresponding displays (car radio displays).

The RDS receiver RDR scans e.g. three times per second the FM frequency band. On reception of the first signal of said RDS emitter RDE, the RDS receiver RDR switches to the chosen frequency announced. After synchronisation with this frequency, the identification key is read and evaluated. After a positive evaluation the previously described message exchange of the enhanced mobile terminal MT' is initiated.

## Claims

1. A method for a treatment of emergency calls in a communications network (MN) comprising an emergency server (SV) to be contacted by an emergency calling terminal (MT, MT'), **characterized in, that** the following steps are performed:
• personal data is entered into a memory (SIM) allocated to said terminal (MT,MT'),
• if an emergency situation is detected by said terminal (MT, MT'), an emergency information (EI) comprising said personal data is sent to said emergency server (SV) and
• the emergency server (SV) sends back a feedback information (FI) to said terminal (MT, MT').

2. A method according to claim 1, **characterized in, that** the following further steps are performed:
• at least one address of at least one further selected terminal to be informed in case of emergency is entered into said memory (SIM) allocated to said terminal (MT,MT') and
• information about the emergency situation is sent to said at least one selected terminal, if an emergency situation is detected.

3. A method according to claim 1, **characterized in, that** the location of the terminal (MT, MT') is automatically determined and a corresponding location information is added to said emergency information (EI).

4. A method according to claim 1, **characterized in, that** an emergency situation in the terminal (MT, MT') is detected, if a specific key input is carried out.

5. A method according to claim 4, **characterized in, that** the terminal (MT, MT') is automatically activated, if said specific key input is carried out.

6. A method according to claim 1, **characterized in, that** for detection of an emergency situation in the terminal (MT, MT'),
• said terminal (MT, MT') is equipped with a radio receiver (RDR),
• a corresponding radio emitter (RDE) is connected with an emergency sensor (SEN) and
• in an emergency case, said sensor (SEN) activates the radio emitter (RDE) to emit an emergency signal (1) to be received by said radio receiver (RDR).

7. A method according to claim 6, **characterized in, that** said sensor (SEN) activates the radio emitter (RDE) to additionally emit an emergency signal (2) to be received by multiple of radio receivers (C1, C2) within a certain area (LA).

8. A terminal (MT,MT') for a communications network (MN) with an emergency server (SV) to be called in an emergency situation, **characterized in, that** the following means are comprised:
• access means that are realised such, that personal data, an address of at least one receiving terminal and the address of the emergency server entered into the terminal (MT, MT') or stored in a memory (SIM) allocated to said terminal are retrieved,
• detection means that are realised such, that if an emergency situation is detected, an emergency information (EI) is generated comprising said personal data and
• sending means for sending said emergency information (EI) to said emergency server (SV) and sending further information to the at least one receiving terminal.

9. An emergency server (SV) connected to a communications network (MN) for receiving emergency calls initiated by a terminal (MT, MT'), **characterized in, that** following means are comprised:
• receiving means for receiving an emergency information (EI) initiated by the terminal (MT, MT'),
• identification means for identification of said terminal (MT, MT'),
• access means that are realised such, that corresponding personal data allocated to said terminal (MT, MT'), stored in a memory of said emergency server (SV), is retrieved,
• sending means that are realised such, that on the base of the retrieved personal data, a feedback information (FI) is sent to said terminal (MT, MT').

10. A emergency calling system (ES) comprising a terminal (MT') as claimed in claim 8, further comprising a radio emitter (RDE) with an interface to an emergency sensor (SEN) and a radio receiver (RDR) connected to said terminal (MT), wherein the radio receiver (RDR) comprises terminal activation means that are realised such, that if an emergency signal (1) emitted from the radio emitter (RDE) is received in the frequency modulated receiver (RDR), the terminal (MT') is demanded to send out an emergency information (EI).
